# EUROPEAN PATENT APPLICATION

(11) **EP 2 075 184 A2**
(43) Date of publication of application: **01.07.2009**
(21) Application number: 08156130.0
(22) Date of filing: 14.05.2008
(51) Int. Cl.: B62K 21/26

(54) **Handlebar tape**

(30) Priority: 21.12.2007 TW 96221862 U
(71) Applicant: International Bicycle Products Corporation, Taichung Hsien (TW)
(72) Inventor: Yu, Tsai-Yun, Taichung Hsien (TW)
(74) Representative: Viering, Jentschura & Partner

(57) **Abstract**

The present invention provides a handlebar tape (20) attached to the handlebar of the bycicle. The handlebar tape comprises a body layer (22), an elastic layer (24), a connecting layer (26), and an adjoined layer (28). The body layer (22) has a first surface (221) and a second surface (222). The elastic layer (24) is fixed onto the second surface (222). The connecting layer (26) is fixed onto the elastic layer (24). The adjoined layer (28) has a third surface (281) and a fourth surface (282). The adjoined layer (28) is fixed onto the connected layer (26), wherein the fourth surface of the adjoined layer is adhesive. When the adjoined layer is wrapped around the surface of an object, the handlebar tape is capable of being firmly attached to the object.

## Description

This application claims the benefit of priority based on Taiwan Patent Application No. 096221862 filed on December 21, 2007, the disclosure of which is incorporated herein by reference in its entirety.

### CROSS-REFERENCES TO RELATED APPLICATIONS

Not applicable.

### BACKGROUND OF THE INVENTION

### Field of the Invention

The present invention relates to a handlebar tape, and more particularly, the present invention relates to a handlebar tape wrapped around a handlebar, which provides an anti-slipping, cushioning and elastic effect when the handlebar is held by a user and avoids potential sports injuries to the user.

### Descriptions of the Related Art

Various handlebars such as those of tennis rackets, badminton rackets or bicycles are often helically wrapped with a handlebar tape to provide an anti-slipping effect and make the user feel more comfortable when holding such handlebars. Generally, polyurethane (PU) is often used as the surface layer of the handlebar tape for the user to hold. However, after being used over an extended period of time by the user, the outer surface of the handlebar tape can become slippery and incapable of absorbing or perspiring sweat, making it difficult to firmly grip the handlebar. T o overcome this shortcoming, some handlebar tapes of the prior art have surface layers thereof ground into the rough surfaces or formed with a number of recessed portions to increase the friction force between the user's hand and the handlebar tape. However, aside from adding to the complexity of the manufacturing process and the production cost, this may also damage the whole structure while significantly decreasing the elasticity and cushioning capability, thus exacerbating shock to the hand during the sporting process.

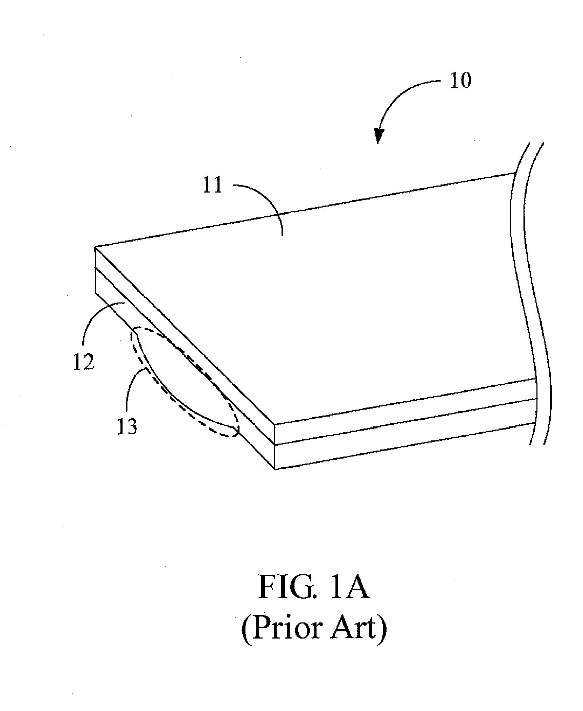

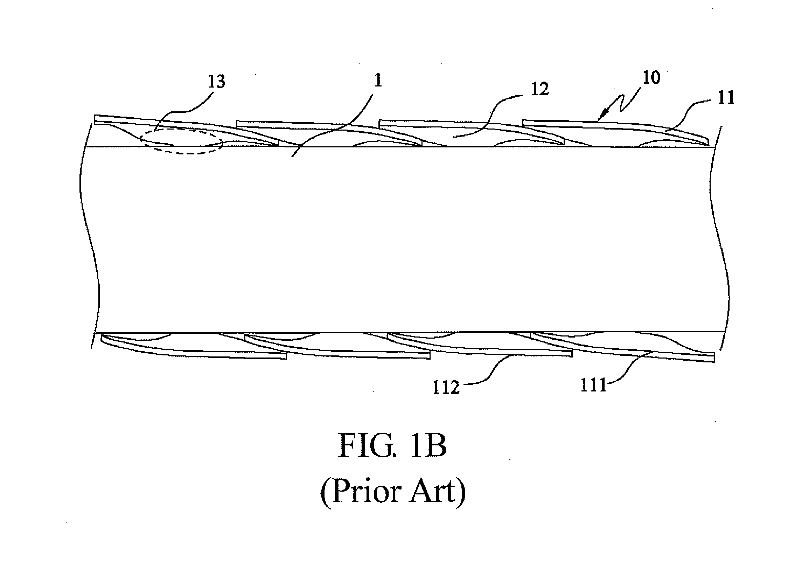

Taiwan Patent Publication No. 535622 discloses a handlebar tape **10** made of a thin cloth strip. The handlebar tape **10** has a cloth layer **11** and an elastic layer **12,** and is wrapped around a handlebar **1** with the cloth layer **11** facing outwards. Drawings related to the handlebar tape **10** are depicted in **FIG. 1A** and **FIG. 1B****,** in which **FIG. 1A** is a schematic partial view of the handlebar tape **10,** and **FIG. 1B** is a cross-sectional view of the handlebar tape **10** wrapped around the handlebar **1.**

As depicted in **FIG. 1A** and **FIG. 1B****,** the cloth layer **11** is a thin strip with a first surface **111** and a second surface **112.** The elastic layer **12,** which is made of a silicon gel, is attached to the first surface **111** of the cloth layer **11.** The central portion of the elastic layer **12** is formed with a protruding rib **13** extending along the major axis of the cloth layer **11.** The cloth layer **11** is helically wrapped around the handlebar **1** with the second surface **112** facing outwards, making the user feel more comfortable when holding the handlebar **1.**

If the elastic layer **12** is used as a wrapping interface between the handlebar tape **10** and the handlebar **1** without an adhesive layer existing therebetween, the handlebar tape **10** tends to slip away or separate from the handlebar **1** after an extended time period of use. Furthermore, even when glue is applied to the handlebar **1** or a dual-side adhesive tape is applied on the inner surface of the elastic layer **12** before the handlebar tape **10** is wrapped, the bonding strength between the handlebar tape **10** and the dual-side adhesive tape can not be strong enough. Therefore, release of the handlebar tape **10** from the handlebar **1** and separation of the elastic layer **12** from the dual-side adhesive tape still tend to occur.

As described above, handlebar tape of the prior art are not firmly attached. Accordingly, it is important to develop a handlebar tape with significantly improved adhesive capability and to improve the strength and adhesive force it exhibits when being attached onto a handlebar.

### SUMMARY OF THE INVENTION

The objective of this invention is to overcome the shortcomings of the prior art by providing a handlebar tape featuring a stronger structure, more comfort and better adherence. Besides of the air permeability and sweat absorption, the handlebar tape further provides an anti-slipping, cushioning and elastic effect to avoid sports injury to the user. Moreover, higher adhesion strength will be obtained when the handlebar tape is wrapped on an object like a handlebar, and it is less likely for the handlebar tape to become loose.

A technical solution provided by this invention is as follows: a handlebar tape, comprising a body layer, an elastic layer, a connecting layer and an adjoined layer. The body layer has a first surface and a second surface. The elastic layer is fixed onto the second surface of the body layer. The connecting layer is fixed onto the elastic layer. The adjoined layer has a third surface and a fourth surface. T he third surface of the adjoined layer is fixed onto the connecting layer. The fourth surface of the adjoined layer is adhesive, so that the handlebar tape is capable of being attached to an object firmly when the adjoined layer is wrapped around the surface of the object.

The addition of a connecting layer in the handlebar tape of this invention allows the adjoined layer to be attached thereon, thereby adhering the handlebar tape to the handlebar by using the adjoined layer.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG. 1** is a schematic view of the handlebar tape structure of the prior art;
**FIG. 1B** is a cross-sectional view of the handlebar tape of **FIG. 1A** when wrapped around a handlebar;
**FIG. 2A** is a schematic view of a handlebar tape structure according to the embodiment of this invention;
**FIG. 2B** is a cross-sectional view of the handlebar tape of **FIG. 2A****;** and
**FIG. 2C** is a cross-sectional view of the handlebar tape of **FIG. 2A** when wrapped around a handlebar.

### DESCRIPTION OF THE PREFERRED EMBODIMENT

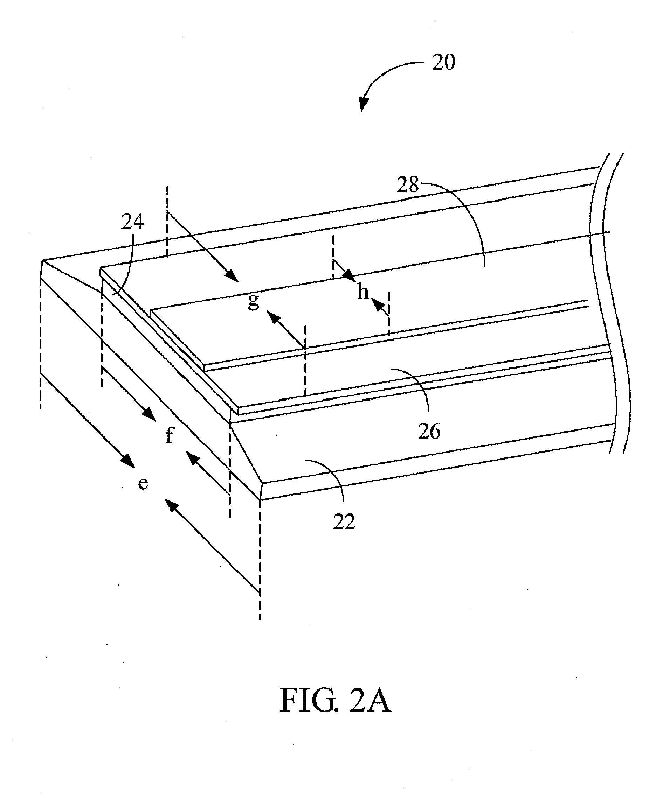

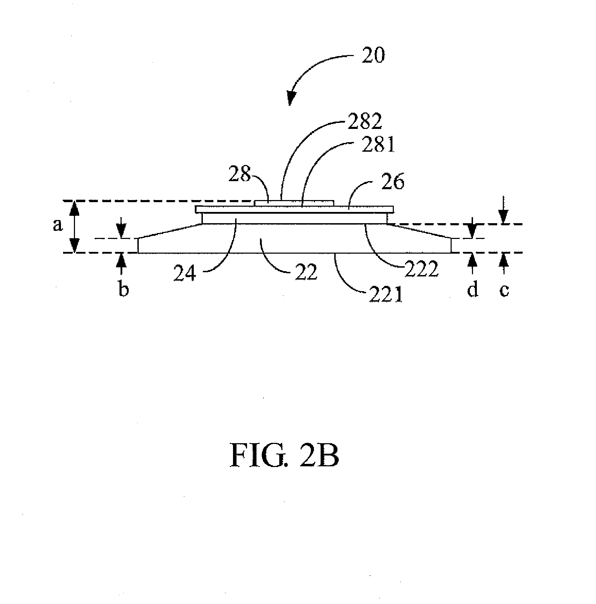

An embodiment of this invention is a handlebar tape **20,** which is applied to a handlebar. **FIG. 2A** and **FIG. 2B** depict a schematic view and a cross-sectional view of the handlebar tape **20** respectively. The handlebar tape **20** comprises a body layer **22,** an elastic layer **24,** a connecting layer **26** and an adjoined layer **28.** In this embodiment, the handlebar tape **20** has a first central thickness **a** and a first peripheral thickness **b,** while the first central thickness **a** is greater than the first peripheral thickness **b.**

The body layer **22** has a first surface **221** and a second surface **222.** On the other hand, the body layer **22** of the handlebar tape **20** further has a second central thickness **c** and a second peripheral thickness **d.** In this embodiment, the second peripheral thickness **d** is exactly the same as the first peripheral thickness **b,** while the second central thickness **c** is greater than the second peripheral thickness **d.**

The elastic layer **24,** which is a gel layer made of a silicon gel, is fixed onto the second surface **222** of the body layer **22.** The body layer **22** has a first width e, while the elastic layer **24** has a second width **f.** In this embodiment, the first width e of the body layer **22** is greater than the second width **f** of the elastic layer **24.** However, in other embodiments, the first width **e** of the body layer **22** may also be equal to the second width **f** of the elastic layer **24.**

The connecting layer **26** is fixed onto the elastic layer **24,** and in this embodiment, is formed of a weave material such as a strip of cloth. Since the connecting layer **26** is made of a weave material with numerous fibrous interspaces, it can be tightly bonded to the elastic layer **24.**

The adjoined layer **28** has a third surface **281** and a fourth surface **282.** The adjoined layer **28** is fixed onto the connection layer **26** by using the third surface **281.** The fourth surface **282** of the adjoined layer **28** is adhesive, so that the handlebar tape **20** is capable of being attached to an object firmly when the adjoined layer **28** is wrapped around the surface of the object. The connecting layer **26** of the handlebar tape **20** has a third width **g**, while the adjoined layer **28** has a fourth width **h.** In this embodiment, the third width **g** of the connecting layer **26** is greater than the fourth width **h** of the adjoined layer **28.** However, in other embodiments, the third width **g** of the connecting layer **26** may also be equal to the fourth width **h** of the adjoined layer **28.**

Initially, the body layer **22** is transferred through the bottom side of a mold that is higher at the central portion than at both sides to form a strip with a greater thickness at the central portion thereof. Then, while the body layer **22** moves along the major axis thereof on a conveyer belt, a molten silicon gel is applied onto the first surface **221** (i.e., the upper surface) of the body layer **22** from fixed points above the conveyer belt to uniformly coat a layer of silicon gel of a predetermined thickness onto the first surface **221** of the body layer **22.**

The elastic layer **24** is applied between the body layer **22** and the connecting layer **26** in the molten state. Upon curing, the elastic layer **24** will have a body layer **22** and the connecting layer **26** fixed at both side respectively. As a result, the adjoined layer **28** is attached to the side of the connecting layer **26** opposite the elastic layer **24.** Due to the adhesion and penetrability thereof, the silicon gel is able to penetrate into the fibrous interspaces by means of a capillary force, and is attached directly to the body layer **22** and the connecting layer **26,** thus forming the elastic layer **24.** In this embodiment, the connecting layer **26** is made of a weave material so that it is easy for the molten material of the elastic layer **24** to penetrate into the fibrous interspaces of the connecting layer **26.** In other embodiments, the connecting layer **26** may also be made of any other materials that allow the elastic layer **24** to be cured thereon and the adjoined layer **28** to be attached thereon.

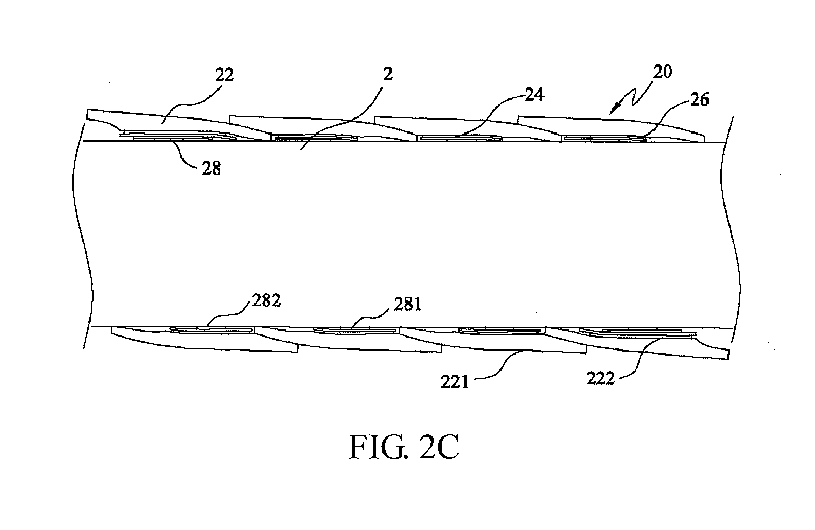

The handlebar tape **20** of this invention is applicable to the handlebars of bicycles, rackets or clubs. For example, **FIG. 2C** illustrates a cross-sectional view of the handlebar tape **20** when wrapped around the handlebar **2** of a bicycle. The handlebar tape **20** is helically wrapped onto the surface of the handlebar **2** with the adjoined layer **28** facing inwards and the body layer **22** facing outwards. The wrapping is performed in such a way that every two adjacent turns are partially overlapped with each other. That is, the thinner peripheral portions of the handlebar tape **20** are partially overlapped with each other, so that a uniform thickness is obtained when the handlebar tape **20** is completely wrapped around the handlebar **2.**

In this invention, the additional connecting layer between the adjoined layer and the elastic layer allows firm attachment to each of the three layers. Accordingly, the handlebar tape of this invention not only has a cushioning capability provided by the elastic layer, but can also be firmly attached on a handlebar via the adjoined layer to enhance the wrapping stability of the handlebar tape, thus providing the user with a softer, more comfortable and elasticity when holding such a handle.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A handlebar tape, comprising:
a body layer, having a first surface and a second surface;
an elastic layer, being fixed onto the second surface of the body layer;
a connecting layer, being fixed onto the elastic layer; and
an adjoined layer, having a third surface and a fourth surface, the third surface of the adjoined layer being fixed onto the connecting layer;
wherein the fourth surface of the adjoined layer is adhesive, so that the handlebar tape is capable of being firmly attached to an object when the adjoined layer is wrapped around a surface of the object.

2. The handlebar tape as claimed in claim 1, wherein the handlebar tape has a first central thickness and a first peripheral thickness, and the first central thickness is greater than the first peripheral thickness.

3. The handlebar tape as claimed in claim 2, wherein the body layer further has a second central thickness and a second peripheral thickness, and the second central thickness is greater than the second peripheral thickness.

4. The handlebar tape as claimed in claim 3, wherein the body layer has a first width and the elastic layer has a second width, and the first width is greater than the second width.

5. The handlebar tape as claimed in claim 4, wherein the connecting layer has a third width and the adjoined layer comprises a fourth width, and the third width is greater than the fourth width or equal to the fourth width.

6. The handlebar tape as claimed in claim 1, wherein the elastic layer is a gel layer.

7. The handlebar tape as claimed in claim 6, wherein the gel layer is formed of a silicon gel.

8. The handlebar tape as claimed in claim 1, wherein the connecting layer is formed of a weave material.

9. The handlebar tape as claimed in claim 1, wherein the object is a handlebar of a manpower vehicle.

10. The handlebar tape as claimed in claim 9, wherein the handlebar is a bicycle handlebar.
